# EUROPÄISCHE PATENTANMELDUNG

(11) **EP 1 693 725 A2**
(43) Veröffentlichungstag der Anmeldung: **23.08.2006**
(21) Anmeldenummer: 06110152.3
(22) Anmeldetag: 20.02.2006
(51) Int. Cl.: G05B 19/042

(54) **Entwicklungssystem für Prozessleitsysteme sowie zugehöriges Verfahren und Computerprogrammprodukt**

(30) Priorität: 21.02.2005 DE 102005008136
(71) Anmelder: SIEMENS AKTIENGESELLSCHAFT, 80333 München (DE)
(72) Erfinder: Abel, Dirk, Prof., 52074 Aachen (DE); Bellm, Hubert, Dr., 76297 Stutensee (DE); Epple, Ulrich, 35614 Asslar-Berghausen (DE); Grieb, Herbert, 76316 Malsch (DE); Münnemann, Ansgar, 52072 Aachen (DE); Orth, Philipp, 52070 Aachen (DE); Pfeiffer, Bernd-Markus, Dr., 76744 Wörth (DE); Spohr, Gerd-Ulrich, Dr., 40822 Mettmann (DE)

(57) **Zusammenfassung**

Die Erfindung betrifft Verfahren und Vorrichtungen für die Entwicklung von Programmen für Prozessleitsysteme (2) und insbesondere für mathematikintensive bzw. mathematisch aufwendige Programme dieser Art.

Nach dem Stand der Technik wurden solche Programme in einer separaten Entwicklungsumgebung erstellt und anschließend der erarbeitete Algorithmus mittels einer für das Prozessleitsystem verfügbaren Programmiersprache und dem zugehörigen Compiler neu implementiert. Die Programmierung und das Testen waren daher zeitintensiv und fehlerträchtig.

Es wird vorgeschlagen, beim Programmieren derartiger Programme den Gesamtalgorithmus in zwei Anteile aufzuspalten:
a) den eigentlichen Regelalgorithmus, mit dem die mathematische Funktionalität eines Reglers bereitgestellt wird,
b) den Algorithmus, mit dem die prozessleitsystemspezifische Funktionalität des obigen Reglers bereitgestellt wird.

Der zweitgenannte Algorithmus läuft in der prozessnahen Komponente (1) des Prozessleitsystems (2) ab und der eigentliche Regelalgorithmus in einem industrietauglichen Computer (3). Um den Prozess zu regeln, tauschen beide Algorithmen Daten aus, wobei die Entscheidungsführerschaft auf der Leitsystemebene verbleibt.

## Beschreibung

Die Erfindung betrifft Prozessleitsysteme und insbesondere Vorrichtungen und Verfahren zum Entwickeln und Testen von Programmen, mit denen Prozessleitsysteme Prozesse steuern und/oder regeln. Insbesondere betrifft die Erfindung die Entwicklung modellbasierter und/oder optimierungsbasierter Programme für Prozessleitsysteme, z. B. prädiktive Regler, Soft-Sensoren oder Diagnoseverfahren.

### Stand der Technik

Prozessleitsysteme dienen dem Führen verfahrenstechnischer Anlagen und besitzen prozessnahe Komponenten, die über ein Bussystem mit den Komponenten des zu führenden bzw. zu steuernden/regelnden Prozesses, so z. B. Aktoren oder Sensoren, verbunden sind. Meist weist das Prozessleitsystem eine an das Bussystem angekoppelte Bedien- und Beobachtungsstation auf, damit im Bedarfsfall manuell in den Prozessablauf eingegriffen werden kann.

Die Logik des Prozessleitsystems (PLS) befindet sich in der prozessnahen Komponente in Gestalt eines Computerprogramms, nachfolgend auch PLS-Programm genannt. Die Programmierung derartiger PLS-Programme erfolgt nach dem Stand der Technik in einem Engineering-System, das verschiedene Programmiersprachen und Editoren für die standardmäßigen Automatisierungsfunktionen zur Verfügung stellt und direkt mit dem Prozessleitsystem verbunden ist. Mathematisch besonders aufwendige Algorithmen zur Prozessführung bzw. gehobene Regelungsverfahren werden dagegen zunächst in einer separaten Entwicklungs- und Simulationsumgebung realisiert und getestet, welche vom Prozessleitsystem räumlich getrennt ist und mit dieser auch keine Daten austauschen kann. Die Entwicklungsumgebung umfasst einen Computer, auf dem beispielsweise unter dem Betriebssystem WindowsⓇ etablierte Entwicklungs- und Simulationssoftware läuft. Ein diesbezüglich häufig eingesetztes Softwarepaket heißt MATLAB/SIMULINK® und stammt von der Firma MathWorks aus Natick, MA, USA.

Mit MATLAB/SIMULINK® erzeugte Programme sind jedoch für die Abarbeitung durch Mikroprozessoren der Intel-Familie unter MS Windows ohne Echtzeitanforderungen bestimmt. Aus diesem Grund können sie von der Hardware eines Prozessleitsystems nicht abgearbeitet werden. Vielmehr ist es nach Abschluss der Vorarbeiten in der Simulationsumgebung erforderlich, das mit MATLAB/SIMULINK® erzeugte Programm nochmals neu in einer für das jeweilige Prozessleitsystem vorhandenen Programmiersprache zu implementieren.

Diese Neu-Implementierung ist, insbesondere bei komplexen Regelungsverfahren oder auch bei mathematisch aufwendigen Verfahren der Prozessführung, nicht immer durchführbar. Eine Ursache ist, dass die Hardware der Prozessleitsysteme nur begrenzt leistungsfähig ist und insofern in solchen Fällen bzgl. ihrer Rechenleistung und ihres Speicherplatzes rasch an ihre Grenzen stößt. Eine andere Ursache ist, dass die oben genannten Compiler für Prozessleitsysteme, z. B. solche für die Hochsprache SCL (Structured Text nach IEC 1131-3), nicht über mathematische Softwarebibliotheken z. B. für numerische Verfahren oder Matrizenoperationen verfügen, im Gegensatz zum oben genannten Softwarepaket MATLAB/SIMULINK®. Dementsprechend ist es erforderlich, fehlende Bibliotheken aufwendig nachzubilden.

Der Erfindung liegt das technische Problem zugrunde, Verfahren und Vorrichtungen bereitzustellen, mit denen die Entwicklung von PLS-Programmen und insbesondere mathematisch aufwendigen PLS-Programmen vereinfacht wird.

Die Lösung dieses technischen Problems erfolgt durch die Merkmale der unabhängigen Ansprüche. Vorteilhafte Weiterbildungen werden durch die abhängigen Ansprüche wiedergegeben.

Der Erfindung liegt zunächst die Idee zugrunde, den zum Steuern/Regeln eines Prozesses notwendigen Programmcode bzw. den dem Programmcode zugrunde liegenden Algorithmus in zwei Anteile aufzuspalten. Diese Anteile sind:
a) der eigentliche Regelalgorithmus, mit dem die Funktionalität eines Reglers, z. B. eines PID-Reglers oder eines Mehrgrößenreglers, bereitgestellt wird,
b) der Algorithmus, mit dem die prozessleitsystemspezifische Funktionalität des obigen Reglers bereitgestellt wird.

Der eigentliche Regelalgorithmus, z. B. der PID-Algorithmus, kann, wenn in der Programmiersprache C geschrieben, unter Umständen nur wenige Kilobyte groß sein. Mathematisch anspruchsvollere Regelalgorithmen lassen sich dagegen schneller und besser mit einer handelsüblichen Entwicklungs- und Simulationssoftware erstellen, so z. B. mit dem vorstehend genannten Programmpaket MATLAB/SIMULINK®. Beim Programmieren des eigentlichen Regelalgorithmus wird noch nicht berücksichtigt, dass er in einem Prozessleitsystem zum Ablauf gebracht wird.

Der zweitgenannte Algorithmus b) ergänzt den eigentlichen Regelalgorithmus und berücksichtigt, dass der gesamte Programmcode in einem Prozessleitsystem ablaufen wird. Mit ihm erfolgt die Anpassung an die Hardware und Funktionalität des Prozessleitsystems. Hierzu stellt der Algorithmus b) folgende Funktionen bereit:
a) er holt Sollwerte für Regelgrößen von verschiedenen Quellen und begrenzt diese bzw. deren Gradienten ("Sollwertrampe"),
b) er sorgt im Bedarfsfall für die Ausgabe von Alarmmeldungen,
c) er ermöglicht den Datenaustausch mit einer gegebenenfalls vorhandenen, dem Prozessleitsystem zugeordneten Bedienund Beobachtungsstation,
d) er verwaltet die verschiedenen Betriebszustände des Reglers wie Initialisierung, Synchronisation, Handbetrieb und Automatikbetrieb, und zwar über ein standardisiertes Zustandssteuerwerk,
e) er schaltet die an das Prozessleitsystem angeschlossenen Komponenten bei einem Ausfall des Regelverfahrens in einen sicheren Zustand.

Der Algorithmus zur Bereitstellung der prozessleitsystemspezifischen Funktionalität eines Reglers ist in Form eines Programmcodes in den internen Speicher der prozessnahen Komponente eines Prozessleitsystems ladbar und von dieser ausführbar. Dieser Programmcode stellt ein erstes Computerprogramm dar, welches bei der Durchführung des erfindungsgemäßen Verfahrens in der prozessnahen Komponente des Prozessleitsystems abläuft.

Der Programmcode mit dem eigentlichen Regelalgorithmus wird nachfolgend als zweites Computerprogramm bezeichnet. Dieses zweite Computerprogramm ist gegebenenfalls ein selbstständig ausführbares Programm, kann aber auch ein nicht selbstständig ausführbares Programmmodul sein, das von einer übergeordneten Programmkomponente eingesetzt wird. Das zweite Computerprogramm wird auf einem handelsüblichen Computer und insbesondere einem Computer in industrietauglicher Bauweise zum Ablauf gebracht. Dieser Computer wird nachfolgend auch als erster Computer bezeichnet. Hierfür geeignete Computer sind beispielsweise die von der Anmelderin kommerziell vertriebenen Computermodelle "Simatic-Box-PC" oder "AddFEM Power", auf deren Gebrauchsvorteile in Bezug auf die vorliegende Erfindung nachfolgend noch näher eingegangen wird.

Das erste und das zweite Computerprogramm dienen dazu, den jeweiligen Prozess gemeinschaftlich zu steuern oder zu regeln. Hierbei erfolgt ein gegenseitiger Datenaustausch.

Hierzu ist vorgesehen, dass das Prozessleitsystem und der erste Computer jeweils an einen Datenbus, insbesondere einen Feldbus, angeschlossen sind. So kann vorgesehen sein, dass das Prozessleitsystem als Master an einen Feldbus wie den PROFIBUS angeschlossen ist und der erste Computer als Slave. Auf diese Weise verbleibt die Entscheidungsführerschaft auf der Leitsystemseite.

Beim Datenaustausch über den Datenbus werden z. B. Ist-Werte von Prozessparametern zum ersten Computer übertragen, und zwar entweder direkt vom Prozess zum ersten Computer oder aber indirekt vom Prozess zum Prozessleitsystem und von dort über den Datenbus zum ersten Computer. Umgekehrt werden Stellwerte über den Datenbus vom ersten Computer zum Prozess transferiert, und zwar direkt oder indirekt wie oben beschrieben.

Bei einem direkten Datentransfer vom Prozess zum ersten Computer lassen sich schnelle Zugriffszeiten auf Prozessgrößen realisieren. Besonders geeignet ist beispielsweise das oben genannte Computermodell "AddFEM Power", weil es über eine sehr schnelle Eingabe-/Ausgabe-Schnittstelle verfügt. Damit kann der erste Computer direkt auf die analogen oder digitalen Prozesssignale zugreifen.

Wie aus den obigen Ausführungen ersichtlich, muss ein Datenaustausch zwischen dem ersten und dem zweiten Computerprogramm gewährleistet werden. Hierzu ist das zweite Computerprogramm ausgebildet und verfügt dementsprechend über geeignete Programmkomponenten, beispielsweise in Form eines Kommunikationsmoduls. Der Datenaustausch erfolgt am besten unter Einsatz einer funktional standardisierten Schnittstelle unter Einsatz eines standardisierten formalen Zustandssteuerwerks. Damit wird vermieden, Kommunikationsmechanismen applikationsspezifisch bei jedem Projekt aufs Neue implementieren zu müssen.

Beim oben genannten Datenaustausch können die ausgetauschten Daten dem zweiten Computerprogramm zugeführte Prozesswerte sein. Diese Prozesswerte dienen beispielsweise als Ist-Werte für den eigentlichen Regelalgorithmus, der seinerseits Stellwerte für Stellgrößen berechnet. Diese Stellwerte gelangen als Datenstrom zum Prozessleitsystem und werden bestimmungsgemäß vom darin residierenden ersten Computerprogramm zur Regelung des Prozesses, im Regelfall eines Industrieprozesses, eingesetzt.

Dem oben beschriebenen System zur Durchführung des Verfahrens ist bevorzugtermaßen ein Prozessleitsystem zugeordnet. In die prozessnahe Komponente des Prozessleitsystems lässt sich dann das erste Computerprogramm laden und ausführen. Zusätzlich verfügt das Prozessleitsystem über eine Bedien- und Beobachtungsstation, welche an die prozessnahe Komponente angeschlossen ist. Auf diese Weise können manuell Sollwerte oder Hand-Stellgrößen vorgegeben werden, die über die prozessnahe Komponente und den Feldbus an den ersten Computer transferiert werden.

Dem Prozessleitsystem ist ein zweiter Computer zugeordnet, welcher ausgebildet ist, um darauf echtzeitfähige zweite Computerprogramme zu entwickeln. Hierzu kann der zweite Computer über das oben genannte Programmpaket MATLAB/SIMU-LINKⓇ verfügen, mit welchem zum einen der eigentliche Regelalgorithmus entwickelt werden kann und dieser zum anderen in einen echtzeitfähigen Code überführt werden kann. Weiterhin vermag der zweite Computer den echtzeitfähigen Programmcode bzw. das zweite Computerprogramm über eine Datenverbindung auf den ersten Computer herunterzuladen.

In der letztgenannten Ausgestaltung ist das erfindungsgemäße System eine vollständige Entwicklungsumgebung, mit der Regelprogramme für Prozessleitsysteme entwickelt und getestet werden können. Die Programmierung erfolgt hierbei ausschließlich auf dem besagten zweiten Computer, beispielsweise unter MATLAB/SIMULINK®, und zwar insbesondere nur einmal ohne eine nachfolgende Neu-Implementierung mittels einer Programmiersprache für Prozessleitsysteme. Die Entwicklung ist damit erheblich vereinfacht, erfolgt schneller und ist weniger fehleranfällig.

Da das zweite Computerprogramm auf einem handelsüblichen Computer ablaufen kann, beispielsweise einem Standard-PC auf Basis eines Intel-Prozessors, entfallen zudem auf preiswerte Weise die oben genannten Beschränkungen infolge begrenzter Rechenleistung und begrenztem Speicherplatz des Prozessleitsystems.

Darüber hinaus ergeben sich weitere Vorteile aus dem Umstand, dass die Softwarebibliotheken auf dem zweiten Computer, z. B. die des Programmpakets MATLAB/SIMULINK®, ungleich mächtiger sind als diejenigen nativer Compiler für Prozessleitsysteme. Dadurch wird die Programmierung zum einen vereinfacht, zum anderen werden bestimmte Programmierungen überhaupt erst ermöglicht.

Das erfindungsgemäße Verfahren erfolgt bevorzugterweise derart, dass während der Laufzeit des zweiten Computerprogramms auf den ersten Computer weiterer Programmcode dynamisch nachgeladen wird. Wie oben beschrieben, wird der Programmcode vom zweiten Computer nachgeladen, auf dem die Programmierung unter MATLAB/SIMULINK® erfolgt. Dies hat den Vorteil, dass eine Softwareaktualisierung während des laufenden Prozesses erfolgen kann. Dies vermeidet den Nachteil, dass man für eine Aktualisierung des Gesamtprogramms zur Regelung des Prozesses den Prozess stoppen und neu anfahren muss. Auf diese Weise werden Ausfallzeiten der zugehörigen Industrieanlage vermieden.

Das Verfahren kann auch so betrieben werden, dass mindestens zwei verschiedene Programmcodes bzw. zwei verschiedene zweite Computerprogramme gleichzeitig zueinander umschaltbar auf dem ersten Computer vorgehalten werden, wodurch das System teilredundant ausgelegt ist.

Wie aus den obigen Ausführungen ersichtlich, ist das erfindungsgemäße Verfahren zumindest teilweise mittels eines Computerprogramms durchführbar bzw. wird zumindest teilweise mittels eines Computerprogramms durchgeführt. Das Computerprogramm kann hierbei, wie allgemein üblich, auf einem computerlesbaren Medium, wie einer CD oder einer DVD, abgelegt werden oder mittels einer elektrischen Signalfolge über ein Datennetz, wie das Internet, übertragen werden.

Nachfolgend soll die Erfindung anhand eines Ausführungsbeispiels in Verbindung mit den Figuren näher erläutert werden.

Es zeigen:
- Fig. 1: eine erste Ausführungsform des erfindungsgemäßen Systems,
- Fig. 2: eine zweite Ausführungsform des erfindungsgemäßen Systems.

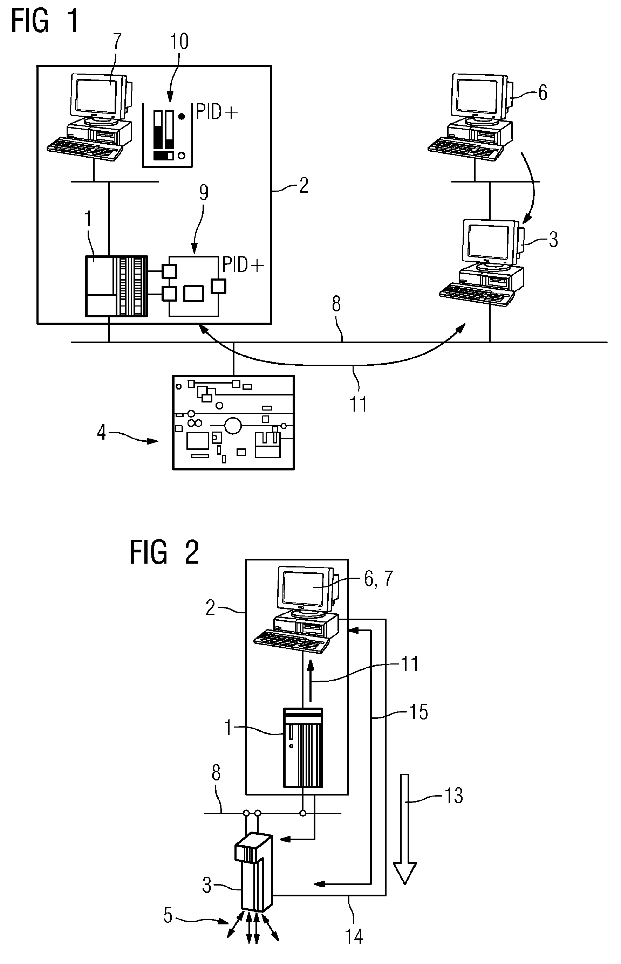

Eine erste Ausführungsform des erfindungsgemäßen Systems zeigt Fig. 1. Dieses umfasst ein Prozessleitsystem 2 des Typs Simatic PCS7, wie es von der Anmelderin kommerziell vertrieben wird. Dieses besitzt eine prozessnahe Komponente 1 und eine Bedien- und Beobachtungsstation 7. Die prozessnahe Komponente 1 ist hierbei eine Simatic-S7-Steuerung und die Bedien- und Beobachtungsstation 7 ein Standard-PC mit der Software Simatic WinCC unter Windows 2000 oder XP. Beide sind über einen Systembus (z. B. Industrial Ethernet) miteinander verbunden. Das Prozessleitsystem 2 dient der Regelung eines Prozesses 4.

Ein erstes Computerprogramm, das durch ein Symbol 9 angedeutet ist, befindet sich in einem Speicherbereich der prozessnahen Komponente 1. Es handelt sich hierbei um das Computerprogramm PID+, welches die prozessleitsystemspezifische Funktionalität eines Regler-Rahmens abbildet, d. h. Sollwertvorverarbeitung, Stellgrößen-Nachverarbeitung, Betriebsartenumschaltungen, Alarm- und Meldeverhalten, und zwar für den Eingrößen- oder denMehrgrößenfall. Ein Symbol 10 deutet ferner an, dass das erste Computerprogramm über die Bedienund Beobachtungsstation 7 mit einem vorgefertigten, standardisierten Bedienbild (Faceplate) bedient und beobachtet werden kann.

Ein erster Computer 3 ist als Slave am PROFIBUS 8 angeschlossen. Beim ersten Computer 3 handelt es sich um einen von der Anmelderin kommerziell vertriebenen industrietauglichen Simatic-Box-PC. Durch die Schutzart IP 20 besitzt dieser PC eine besondere Robustheit bezüglich elektromagnetischer Verträglichkeit, Temperaturen, Vibrations- und Schockverhalten. Auf diesem läuft ein zweites Computerprogramm in Gestalt eines maschinenabhängigen Programmcodes. Dieser kann vom zweiten Computer 6 heruntergeladen werden, was durch den Pfeil angedeutet ist. Der zweite Computer 6 ist ein Standard-Windows-PC, an den keine speziellen Anforderungen gestellt werden. Auf diesem läuft die Entwicklungsumgebung MATLAB/SIMULINK®. Im Betrieb werden das erste und das zweite Computerprogramm gleichzeitig ausgeführt, wobei sie untereinander Daten austauschen, was durch den Pfeil 11 angedeutet ist.

Eine zweite Ausführungsform des erfindungsgemäßen Systems zeigt Fig. 2. Im Vergleich zur Ausführungsform gemäß Fig. 1 fungiert bei dieser die Bedien- und Beobachtungsstation 7 gleichzeitig als zweiter Computer 6, sodass insofern letzterer eingespart wird. Bei der prozessnahen Komponente 1 handelt es sich um eine von der Anmelderin kommerziell vertriebene Simatic AS, welche als Master am PROFIBUS 8 angeschlossen ist. Die prozessnahe Komponente 1 überträgt dem zweiten Computer 6 über den Systembus Messwerte von Prozessgrößen, was mit dem Pfeil 11 angedeutet ist.

Der zweite Computer 6 ist zudem mit dem ersten Computer 3 verbunden. Einerseits erlaubt eine Datenleitung 14 das Herunterladen des ersten Computerprogramms im Sinne der obigen Ausführungen, was durch den Pfeil 13 angedeutet ist. Andererseits sind der erste und der zweite Computer über eine RS232-Verbindung miteinander verbunden, um gegenseitig Daten auszutauschen, was mit dem Doppelpfeil 15 angedeutet ist.

Bei dem ersten Computer 3 handelt es sich um einen von der Anmelderin kommerziell vertriebenen Computer "AddFEM Power", welcher über eine schnelle I/O-Schnittstelle 5 zum direkten Zugriff auf Binär- und Analogsignale des zu regelnden Prozesses 4 verfügt.

## Patentansprüche

1. System für Prozessleitsysteme, umfassend:
a) ein erstes Computerprogramm, welches
a1) die prozessleitsystemspezifische Funktionalität eines Reglers bereitstellt und
a2) in die prozessnahe Komponente (1) eines Prozessleitsystems (2) ladbar und von dieser ausführbar ist,
b) einen ersten Computer (3),
c) ein auf dem ersten Computer (3) ausführbares zweites Computerprogramm zum Steuern und/oder Regeln eines Prozesses (4), welches ausgebildet ist,
c1) auf dem ersten Computer (3) einen echtzeitfähigen Programmcode eines Regelalgorithmus für den besagten Regler auszuführen und
c2) Daten mit dem in einem Prozessleitsystem (2) residierenden ersten Computerprogramm auszutauschen.

2. System nach Anspruch 1, **dadurch gekennzeichnet, dass** die ausgetauschten Daten dem zweiten Computerprogramm zugeführte Prozesswerte umfassen.

3. System nach Anspruch 1 oder 2, **dadurch gekennzeichnet, dass** die ausgetauschten Daten dem ersten Computerprogramm zugeführte Stellwerte von Stellgrößen umfassen.

4. System nach einem der Ansprüche 1 bis 3, **dadurch gekennzeichnet, dass** für den ersten Computer (3) eine Eingabe-/Ausgabe-Schnittstelle (5) zum direkten Zugriff auf analoge und/oder digitale Signale des zu führenden Prozesses (4) vorgesehen ist.

5. System nach Anspruch 4, **dadurch gekennzeichnet, dass** ihm ein Prozessleitsystem (2) zugeordnet ist und dem Prozessleitsystem (2) ein zweiter Computer (6) zugeordnet ist, welcher ausgebildet ist
a) für die Entwicklung von Algorithmen für Regler für Prozessleitsysteme (2) und für die Umwandlung dieser Algorithmen in einen echtzeitfähigen Programmcode,
b) für das Herunterladen des echtzeitfähigen Programmcodes auf den ersten Computer (3).

6. Verfahren zum Entwickeln von Programmen für Prozessleitsysteme mit folgenden Schritten:
a) Bereitstellen eines ersten Computerprogramms innerhalb der prozessnahen Komponente (2) eines Prozessleitsystems (1), wobei das erste Computerprogramm die prozessleitsystemspezifische Funktionalität eines Reglers bereitstellt,
b) Bereitstellen eines zweiten Computerprogramms auf einem ersten Computer (3), wobei das zweite Computerprogramm den eigentlichen Algorithmus für den besagten Regler umfasst, und
c) gleichzeitige Ausführung des ersten und des zweiten Computerprogramms unter gegenseitigem Datenaustausch zum Steuern und/oder Regeln eines Prozesses (4).

7. Verfahren nach Anspruch 6, **dadurch gekennzeichnet, dass** das Bereitstellen des zweiten Computerprogramms durch Programmieren des zugrunde liegenden Algorithmus auf einem zweiten Computer (6), Überführen desselben in einen echtzeitfähigen Programmcode und Herunterladen des echtzeitfähigen Programmcodes auf den ersten Computer (3) erfolgt.

8. Verfahren nach Anspruch 6 oder 7, **dadurch gekennzeichnet, dass** das zweite Computerprogramm während seiner Ausführung mit dem ersten Computerprogramm Daten austauscht.

9. Verfahren nach Anspruch 8, **dadurch gekennzeichnet, dass** die ausgetauschten Daten dem zweiten Computerprogramm zugeführte Prozesswerte umfassen.

10. Verfahren nach Anspruch 8 oder 9, **dadurch gekennzeichnet, dass** die ausgetauschten Daten dem ersten Computerprogramm zugeführte Stellwerte von Stellgrößen umfassen.

11. Verfahren nach einem der Ansprüche 7 bis 10, **dadurch gekennzeichnet, dass** während der Laufzeit des zweiten Computerprogramms auf den ersten Computer (3) weiterer Programmcode dynamisch nachgeladen wird.

12. Verfahren nach einem der Ansprüche 7 bis 11, **dadurch gekennzeichnet, dass** mindestens zwei verschiedene zweite Computerprogramme gleichzeitig zueinander umschaltbar auf dem ersten Computer (3) vorgehalten werden.

13. Computerprogrammprodukt, umfassend ein computerlesbares Medium, auf welchem ein Computerprogrammcode abgelegt ist, sodass bei dessen Laden in den internen Speicher eines Computers ein Verfahren nach einem der Ansprüche 6 bis 12 durchgeführt wird.
